# FASCICULE DE BREVET EUROPEEN

(11) **EP 0 412 893 B1**
(45) Date de publication et mention de la délivrance du brevet: **20.10.1993**
(21) Numéro de dépôt: 90402246.4
(22) Date de dépôt: 06.08.1990
(51) Int. Cl.: B29C 45/14, G06K 19/06

(54) **Procédé de réalisation de corps de carte et de cartes à graphisme, et corps de carte ainsi obtenus**
Verfahren zum Herstellen von Kartenkörpern und Karten mit graphischen Elementen und so erhaltene Karten
Method for making card bodies and cards with graphic elements and card bodies so obtained

(30) Priorité: 07.08.1989 FR 8910591
(43) Date de publication de la demande: 13.02.1991
(73) Titulaire: SCHLUMBERGER INDUSTRIES, F-92120 Montrouge (FR)
(72) Inventeur: Rose, René, F-78190 Voisin-le-Bretonneaux (FR)
(74) Mandataire: Dronne, Guy

(56) Documents cités:
- EP-A- 0 267 826
- EP-A- 0 277 854
- EP-A- 0 340 099
- EP-A- 0 340 100
- WO-A-88/08171
- DE-A- 2 045 932
- FR-A- 1 234 237
- FR-A- 1 340 878
- GB-A- 2 185 708
- PATENT ABSTRACTS OF JAPAN, vol. 11, no. 125 (M-582), 18 avril 1987; & JP-A-61 268 415 (RIYOUDEN KASEI) 27-11-1986
- PATENT ABSTRACTS OF JAPAN, vol. 11, no. 125 (M-582)[2572], 18 avril 1987; & JP-A-61 268 418 (RIYOUDEN KASEI) 27-11-1986

## Description

La présente invention a pour objet la réalisation de corps de carte, notamment à mémoire électronique, qui comportent un graphisme sur au moins une de leurs faces principales, ce graphisme pouvant consister en des informations alphanumériques ou en des dessins à but décoratif ou publicitaires.

Pour réaliser le corps de telles cartes, notamment des cartes à mémoire électronique aux normes ISO, une technique maintenant bien connue consiste à réaliser le corps de la carte par moulage par injection, par exemple d'ABS, dans un moule dont l'empreinte définit la forme du corps de la carte (le brevet français 2.605.144 décrit un tel procédé). Au lieu de réaliser directement le corps de la carte par moulage, il est possible de réaliser par moulage une plaque en matériau plastique dans laquelle on découpera ultérieurement les corps de plusieurs cartes. Toutefois les spécifications de dimensions (notamment en ce qui concerne l'épaisseur du corps de carte) et de propriétés physiques (notamment en ce qui concerne les propriétés de flexion de la carte) font qu'il est pratiquement exclu de réaliser une plaque correspondant à un grand nombre de corps de carte.

Dans le cas d'un corps de carte individuel comme dans le cas d'une plaque correspondant à quatre corps de carte, la pièce sur laquelle il faut réaliser l'impression a des dimensions relativement réduites. De plus, compte tenu du fait que le corps de carte a une épaisseur de l'ordre de 0,8 mm, les propriétés de flexion de la pièce à imprimer sont très différentes de celles qu'ont les supports d'impression habituels. Pour ces deux types de raisons, il est délicat de réaliser l'impression à l'aide de machines de type classique qu'il s'agisse d'offset ou de sérigraphie, surtout si le graphisme est complexe en raison notamment des nuances de couleur auxquelles il fait appel. De plus le fait de réaliser à chaque passage, une seule "image" ou un nombre limité d'images est onéreux et requiert à chaque fois le positionnement précis de la pièce par rapport à la machine d'impression. En outre, le collage d'une feuille préimprimée sur des pièces de dimensions réduites est pratiquement exclu pour des raisons de coûts prohibitifs.

Pour remédier à ces inconvénients, un objet de l'invention est de fournir un procédé de réalisation de corps de carte qui permette de réaliser dans des conditions économiques acceptables des graphismes de très bonne qualité tout en étant compatible avec l'utilisation d'une technique par moulage par injection.

Selon un premier aspect de l'invention, le procédé permet de réaliser directement un seul corps de carte et il comprend les étapes suivantes:
a) on fournit un moule dont l'empreinte définit la forme extérieure du corps de carte, ladite empreinte étant limitée par deux parois principales définissant lesdites faces principales ;
b) on dispose dans ledit moule un élément support unique ayant les dimensions de ladite face principale comportant sur chacune de ses deux faces un graphisme et on maintient ledit élément support contre une des parois principales du moule de telle manière qu'une des faces de l'élément support soit plaquée contre ladite paroi ;
c) on injecte dans ledit moule un matériau thermoplastique transparent de telle manière que ledit matériau thermoplastique remplisse la totalité de l'espace limité par ladite empreinte non occupé par ledit élément support et adhère audit élément support ; et
d) on démoule la pièce, par quoi on obtient un corps de carte muni d'un graphisme visible sur chacune de ses faces.

Selon un deuxième aspect de l'invention, le procédé permet de réaliser simultanément plusieurs corps de carte et il comprend les étapes suivantes :
a) on fournit un moule dont l'empreinte définit la forme extérieure à donner à une plaque, ladite empreinte étant limitée par deux parois principales, chaque paroi principale contenant une des faces principales de la pluralité de corps à réaliser, lesdites parois étant séparées par une distance égale à ladite épaisseur (e) ;
b) on dispose dans ledit moule au moins un élément support comportant sur au moins une de ses faces les graphismes à réaliser sur la pluralité de corps de carte et on maintient ledit élément support contre une des parois principales du moule de telle manière que la face de l'élément support comportant des graphismes soit plaquée contre ladite paroi principale ;
c) on injecte dans ledit moule un matériau thermoplastique de telle manière que le matériau thermoplastique remplisse la totalité de l'espace limité par ladite empreinte non occupé par ledit élément support et adhère audit élément support ;
d) on démoule la plaque ainsi obtenue ; et
e) on découpe ladite plaque pour séparer lesdits corps de carte.

On comprend que, grâce à l'invention, la réalisation du graphisme se fait lors de l'étape de moulage elle-même. Les supports d'impression sont découpés dans des feuilles préimprimées qui comportent un très grand nombre de motifs identiques. Leur coût est donc réduit puisqu'il fait appel à des techniques d'impression parfaitement classiques. En outre les supports d'impression étant mis en place dans l'empreinte du moule, le graphisme est automatiquement "positionné" par rapport au corps de la carte.

L'invention concerne également l'application dudit procédé de réalisation de corps de carte à la fabrication d'une carte complète, c'est-à-dire d'une carte comportant de plus un module électronique fixé sur le corps de carte.

D'autres caractéristiques et avantages de l'invention apparaîtront plus clairement à la lecture de la description qui suit de plusieurs modes de mise en oeuvre de l'invention donnés à titre d'exemples non limitatifs. La description se réfère au dessin annexé sur lequel :
la figure 1 est une vue de dessus d'une carte à mémoire électronique;
la figure 2a est une vue partielle en coupe horizontale d'un moule pour un premier mode de mise en oeuvre de l'invention ;
La figure 2b est une vue en élévation, à échelle réduite, de la partie mobile du moule de la figure 2a ;
La figure 2c est une vue en coupe verticale d'un corps de carte obtenu par le premier mode de mise en oeuvre de l'invention ;
La figure 3a est une vue en coupe verticale d'un moule pour une première variante du premier mode de mise en oeuvre de l'invention ;
La figure 3b est une vue partielle aggrandie de la figure 3a;
La figure 3c est une vue en coupe verticale d'un deuxième type de moule pour le premier mode de mise en oeuvre de l'invention.
La figure 4 est une vue en coupe verticale d'un moule pour une deuxième variante du premier mode de mise en oeuvre de l'invention ;
La figure 5 est une vue d'un support d'impression pour un deuxième mode de mise en oeuvre de l'invention ;
La figure 6a est une vue en élévation de la partie fixe d'un moule pour le deuxième mode de mise en oeuvre de l'invention.
La figure 6b est une vue en élévation de la partie mobile du moule pour le deuxième mode de mise en oeuvre de l'invention.
La figure 7 est une vue en coupe verticale d'un moule montrant un premier mode de réalisation d'une carte à mémoire complète ; et
La figure 8 est une vue en coupe verticale d'un moule montrant un deuxième mode de réalisation d'une carte complète.

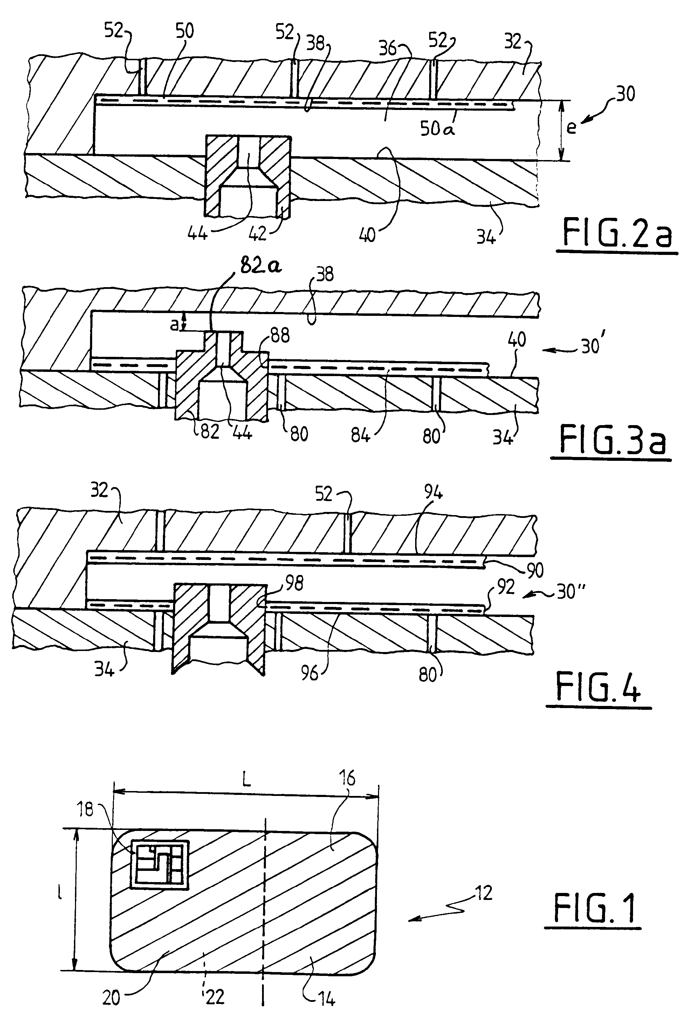

La figure 1 montre en vue de dessus une carte à mémoire électronique de type connu. La carte 12 comprend un corps de carte 14 de forme parallélépipèdique rectangle de longueur L, de largeur 1 et d'épaisseur e. Selon la norme ISO 7810, L vaut 85mm, l vaut 55 mm et e vaut 0,8 mm. En outre le corps 14 doit satisfaire à un certain nombre de tests notamment en ce qui concerne ses propriétés de flexion. Il est réalisé en un matériau plastique. Dans la face principale avant 16 du corps de carte apparaissent des plages de contact électrique 18. Il y en a huit par exemple. La forme et les dimensions de ces contacts, ainsi que leur position par rapport aux bords du corps de carte font également l'objet de la norme ISO 7810. La face avant 16 du corps de carte comporte toujours un graphisme 20 représenté par des hachures sur la figure. Par graphisme il faut entendre soit des dessins décoratifs ou publicitaires soit des mentions alphanumériques soit encore une combinaison des deux. Le plus souvent la face arrière 22 du corps de carte comporte également un graphisme. La carte comporte encore un module électronique, non visible sur la figure, incluant en particulier un circuit intégré dont les bornes sont reliées aux plages de contact 18.

L'invention concerne un procédé pour réaliser un corps de carte par moulage par injection d'un matériau thermoplastique qui comporte directement un graphisme sur au moins une de ses faces principales, typiquement la face avant 16.
Selon un premier mode de mise en oeuvre de l'invention, on moule directement un corps de carte individuel avec son graphisme. Selon un deuxième mode de mise en oeuvre on moule une plaque avec une pluralité de graphismes puis on découpe cette plaque pour obtenir les corps de carte.

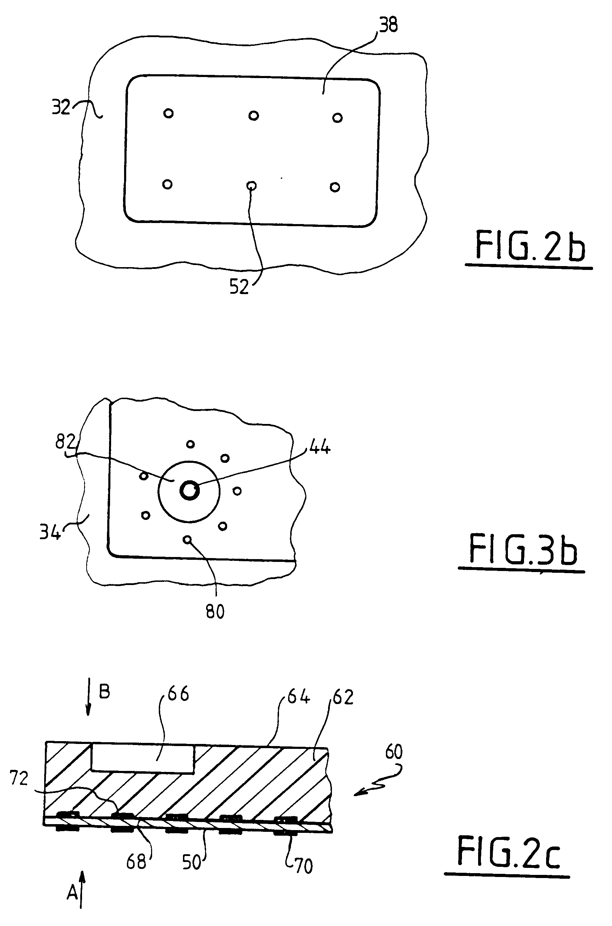

En se référant aux figures 2a et 2b on va décrire un premier exemple du premier mode de mise en oeuvre de l'invention. On utilise un moule d'injection 30 qui comprend une partie fixe 32 et une partie mobile 34. Lorsque le moule 30 est fermé les parties 32 et 34 définissent une empreinte 36 qui a la forme qu'on veut donner au corps de carte. La paroi principale 38 de la partie 32 définit une face principale du corps de carte alors que la paroi principale 40 de la partie 34 définit l'autre face principale. La distance entre les deux faces principales 38 et 40 est donc égale à e et chaque paroi principale a la forme d'un rectangle dont les dimensions sont égales à l et L. Le corps de carte, dans le cas d'une carte à mémoire électronique, doit présenter une cavité pour permettre la mise en place du module électronique. Pour cela la partie 34 du moule comporte un noyau 42 qui fait saillie dans l'empreinte 36. Le noyau a, en négatif, la forme qu'on veut donner à la cavité. Le brevet français déjà cité donne des formes possibles du noyau. De préférence le noyau 42 est percé par une buse d'injection 44 permettant de faire pénétrer le matériau de moulage à l'intérieur de l'empreinte 36.

Pour fabriquer le corps de carte on réalise d'abord un élément support de graphisme ou étiquette à partir d'une bande support sur laquelle sont réalisés un très grand nombre de graphismes identiques. Par découpage on sépare une étiquette du reste de la bande. La bande support peut être réalisée en un matériau opaque qui se prête bien à l'impression par sérigraphie ou par offset. Par exemple on peut utiliser un film en polyester ayant une épaisseur de 50 à 80 microns. On peut également utiliser des polystyrènes régénérés ou non.Dans l'exemple de réalisation décrit le film comporte un graphisme différent sur chacune de ses faces. Après le découpage chaque étiquette comporte donc un graphisme différent sur chacune de ses faces. L'étiquette est découpée pour avoir exactement les mêmes dimensions que les faces principales du corps de carte.

On va maintenant décrire la réalisation du corps de carte. Le moule 30 étant ouvert, on met en place l'étiquette 50 de telle manière qu'elle soit appliquée contre la paroi principale 38 de la partie mobile 32 du moule. Pour maintenir l'étiquette 50 contre la paroi 38, la partie 32 du moule comporte un certain nombre d'orifices 52 de très faible diamètre (par exemple 0,2 mm) qui débouchent dans la paroi principale 38. Les orifices 52 sont reliés à un système à dépression. Puis le moule est refermé et on injecte le matériau de moulage dans l'empreinte 36 à travers la buse 44. Le matériau thermoplastique injecté est de l'ABS transparent dans l'exemple présentement décrit, les conditions d'injection sont celles qui ont été décrites dans le brevet français déjà cité. Le matériau de moulage remplit la totalité de l'empreinte et, compte tenu de sa température et de sa relative fluidité, il adhère à la face 50a de l'étiquette 50. Si le matériau dont est constituée l'étiquette 50 n'est pas compatible avec le matériau de moulage, on peut déposer sur le graphisme de la face 50a de l'étiquette un vernis adhésif.

Malgré la très faible épaisseur de l'empreinte (0,8 mm) comparée à ses dimensions transversales, les essais effectués ont montré que les graphismes réalisés sur l'étiquette n'étaient pas altérés par l'injection du matériau plastique, et que l'étiquette ne modifiait pas la tenue à la flexion du corps de carte.
La figure 2c montre en coupe transversale le corps de carte 60 obtenu par la technique qui vient d'être décrite. Le corps de carte proprement dit 62 est transparent. Dans sa face principale 64 débouche la cavité 66 servant à loger le module électronique. Sur sa deuxième face principale 68 est fixée l'étiquette 50. Si l'on regarde le corps de carte selon la flêche A on voit directement le graphisme 70 réalisé sur la face externe de l'étiquette 50. Si l'on regarde le corps de carte selon la flêche B on voit le graphisme 72 réalisé sur la face interne de l'étiquette 50 à travers le corps 62 qui est transparent. Comme l'épaisseur du corps de carte est faible (0,8 mm) l'effet de paralaxe dû au matériau transparent est négligeable et tout se passe comme si on avait effectivement un graphisme sur chaque face principale du corps de carte. Il apparait au contraire que la vision du graphisme à travers le corps de carte transparent améliore encore les qualités esthétique du corps de carte. Il va de soi que, par ABS, il faut entendre non seulement l'ABS pur mais également divers dérivés de l'ABS.En outre l'ABS transparent pourrait être remplacé par de l'ASN.

Les figures 3a et 3b illustrent un deuxième exemple du premier mode de mise en oeuvre de l'invention. Il est particulièrement bien adapté au cas où la cavité à réaliser dans le corps de carte est profonde comparée à l'épaisseur du corps de carte. Le moule 30' est identique au moule 30 de la figure 2a à deux différences près. Les orifices d'aspiration 80 débouchent dans la face principale 40 de la partie fixe 34 du moule. Le noyau 82 qui comporte toujours la buse d'injection 44 a une forme différente pour réaliser une cavité plus profonde. En d'autres termes l'extrémité 82a du noyau 82 est plus proche de la paroi principale 38. Comme le montre mieux la figure 3b des trous d'aspiration 80 sont disposés en couronne à proximité immédiate du noyau 82.

Pour la mise en oeuvre de ce deuxième exemple on utilise une étiquette 84 qui est identique à l'étiquette 50 de la figure 2a, à l'exception de la présence d'une fenêtre 88. L'étiquette 84 est mise en place dans le moule contre la paroi principale 40 de telle manière que le noyau 82 traverse la fenêtre 88. Pour permettre la mise en place de l'étiquette il faut laisser un jeu, par exemple 1/10e de mm, entre la périphérie du noyau 82 et le bord de la fenêtre 88. On procède à l'injection du matériau plastique dans l'empreinte 36 comme cela a déjà été décrit en liaison avec les figures 2a et 2b. Puis on démoule le corps de carte ainsi réalisé. Il s'agit par exemple d'ABS.

Il faut noter que les trous d'aspiration 80 disposés autour du noyau 82 permettent de bien plaquer contre la paroi 40 la partie de l'étiquette qui entoure la fenêtre 88 et donc d'éviter que cette partie de l'étiquette ne s'écarte de la paroi 40 sous l'effet de la circulation du matériau de moulage lors de l'injection. De plus, du fait que l'étiquette 84 est placée contre la paroi 40 et non contre la paroi 38, la distance a entre l'extrémité 82a du noyau et la paroi 38 reste suffisante pour permettre une injection dans des conditions normales.

La figure 3c illustre un quatrième exemple du premier mode de mise en oeuvre de l'invention.

Selon ce quatrième exemple, le moule 30'' se distingue du moule 30' essentiellement du fait que le noyau 82' ne sert qu'à définir la cavité à réaliser dans le corps de carte et la buse d'injection 44' débouche dans la paroi latérale 39 de la partie 32 du moule. En outre, comme dans le cas de la figure 2a, des trous d'aspiration 52' débouchent dans la paroi principale 38 de la partie 32 du moule pour maintenir l'étiquette 84 plaquée contre cette paroi.

Cette solution est particulièrement intéressante lorsque la cavité à réaliser à l'aide du noyau 82' est profonde. En outre, comme il n'y a pas de point d'injection dans le noyau, la cavité dans le corps de carte a une forme parfaitement définie. Après le démoulage du corps de carte, il faut bien sûr réusiner localement le bord de la carte à l'endroit correspondant au point d'injection. De plus, il va de soi qu'on peut prévoir plusieurs points d'injection débouchant dans la paroi latérale 39 du moule.

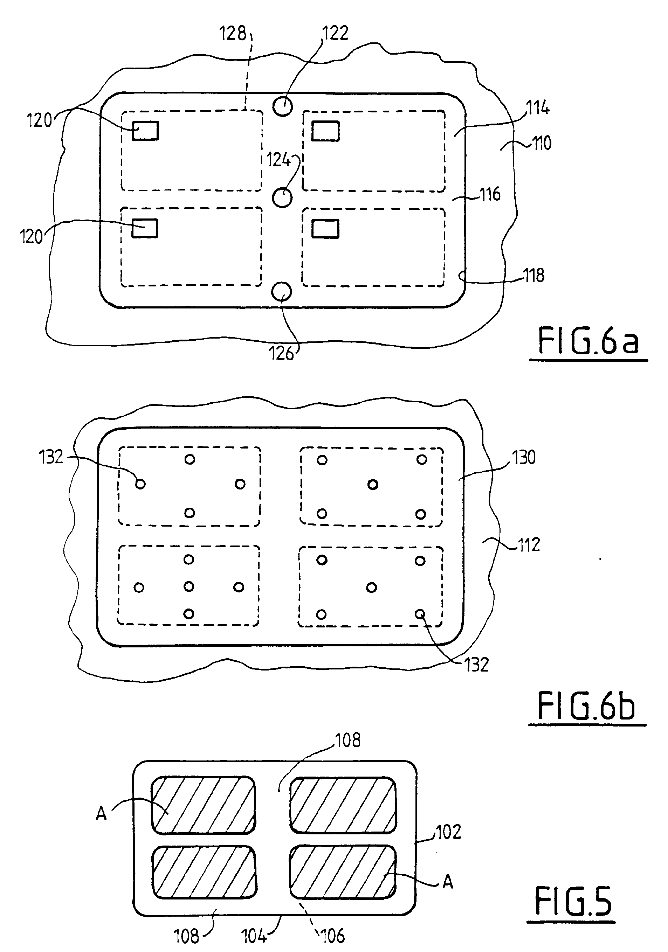

La figure 4 illustre un troisième exemple du premier mode de mise en oeuvre de l'invention. Dans cet exemple les graphismes sur les deux faces principales du corps de carte sont réalisés à l'aide de deux étiquettes 90 et 92. L'étiquette 90 porte un graphisme seulement sur sa face 94. L'étiquette 92 porte un graphisme seulement sur sa face 96 et elle comporte une fenêtre 98. Le moule 30'' comporte une partie fixe 32 identique à celle du moule 30 de la figure 2a et une partie mobile 34 identique à celle du moule 30' de la figure 3a. Les étiquettes 90 et 92 sont mises en places dans le moule comme le montre la figure 4. On referme le moule 30''est on procède à l'injection. Dans ce cas il n'est bien sûr pas nécessaire d'utiliser un matériau de moulage transparent. Puis on démoule corps de carte.

Dans les exemples précédents les étiquettes sont découpées dans un film de polyester pré-imprimé d'une épaisseur de 50 à 80 microns. Il va de soi qu'on pourrait utiliser d'autre matériau par exemple du papier de qualité convenable et d'épaisseur suffisamment réduite pour ne pas occuper trop de place dans le moule.

Dans la description précédente on a indiqué qu'on moulait individuellement chaque corps de carte. Il faut comprendre par là qu'à la sortie du moule le corps de carte a déjà sa forme extérieure. Cependant il est bien clair que la même machine à injecter peut comporter plusieurs empreinte relées entre elles par un ensemble de canaux d'injection alimentant les buses d'injection.

Dans la description précédente l'étiquette ou les étiquettes sont maintenues contre la paroi principale du moule à l'aide de trous d'aspiration. Le maintien en place des étiquettes peut également être réalisé de la manière suivante: On exploite le fait que la bande sur laquelle on réalise les graphismes et donc les étiquettes qui sont découpées dans cette bande sont en général chargées électriquement du fait de la nature du matériau et des manipulations effectuées sur cette bande. Si le moule est maintenu à la masse l'étiquette chargée électriquement se plaque contre la paroi principale du moule et y est maintenue. Pour s'assurer que l'étiquette comporte une charge électrique suffisante il est préférable de faire passer la bande servant à réaliser les étiquettes dans un appareil à polariser.

On va maintenant décrire un premier exemple du deuxième mode de mise en oeuvre de l'invention en se référant aux figures 5 et 6. Selon ce mode de réalisation on réalise par moulage par injection une plaque dont l'épaisseur est égale à e et dont les autres dimensions sont suffisantes pour réaliser plusieurs corps de carte, par exemple 4. Lors du moulage on réalise des cavités, chaque cavité correspondant à un corps de carte, et on met en place un élément support d'impression qui correspond à autant d'étiquettes qu'on veut fabriquer de corps de carte avec la plaque.

Après démoulage de la plaque on découpe la plaque pour individualiser chaque corps de carte. On obtient alors des corps de carte identiques à ceux qui sont obtenus à l'aide du premier mode de mise en oeuvre de l'invention, les corps de carte pouvant être d'un des trois types déjà décrits à savoir : corps transparent et étiquette sur la face avant, corps transparent et étiquette sur la face arrière, et corps non transparent et étiquette sur chacune des faces.

La technique de réalisation par moulage de la plaque avec ses graphismes est, dans son principe, très proche de celle qui est utilisée pour réaliser les corps de carte individuels. On décrira donc simplement un exemple du deuxième mode de mise en oeuvre de l'invention en se référant aux figures 5 et 6. La figure 5 montre un élément support 102 utilisable pour le deuxième mode de mise en oeuvre de l'invention. Il est constitué par une portion d'un film non transparent identique à celui qui a été décrit en liaison avec les figures 2 à 4. Sur chacune des faces 104 et 106 de l'élément support 102 on a imprimé 4 graphismes identiques A destinés à la réalisation simultanée de quatre corps de carte. Chaque graphisme A a les dimensions L et l d'une face principale de corps de carte. Chaque graphisme A est entouré par une zone non imprimée 108.

Les figures 6a et 6b montrent la forme d'un moule utilisable pour le deuxième mode de mise en oeuvre de l'invention, la figure 6a montrant la partie fixe 110 du moule et la figure 6b sa partie mobile 112.

La partie fixe comporte une empreinte 114 qui définit une paroi principale 116 et une paroi latérale 118. Dans la paroi principale 116 font saillie quatre noyaux 120 destinés à réaliser les cavités des quatre corps de carte. Des buses d'injection 122 à 126 débouchent dans la paroi 116. On a figuré en pointillés 128 le contour des corps de carte à réaliser. Les buses d'injection 122 à 126 débouchent dans la paroi 116 à l'extérieur des zones 128 correspondant aux corps de carte. En variante, si la hauteur des noyaux 120 n'est pas trop importante, il est avantageux de faire déboucher les buses d'injection dans les noyaux 120 comme cela a été décrit en détails en liaison avec les figures 2 à 4.

La partie mobile 112 du moule définit la deuxième paroi principale 130 du moule. Dans la paroi 128 débouchent des orifices 132 d'aspiration. Ces orifices 132 ont les mêmes dimensions que les orifices 52 de la figure 2a et ils sont plus particulièrement concentrés dans les zones 128 correspondant aux différents corps de carte. Lorsque le moule est fermé la distance entre les deux parois principales 116 et 130 est égale à e c'est à dire à l'épaisseur du corps de carte.

On va maintenant décrire le mode de réalisation des corps de carte. Le moule étant ouvert, on met en place l'élément support 102 contre la paroi 130 de la partie mobile du moule, et on met en marche le système d'aspiration. Puis on referme le moule et on procède à l'injection du matériau plastique qui est par exemple de l'ABS transparent. Lorsque le matériau plastique est solidifié, on ouvre le moule. On obtient alors une plaque d'épaisseur e comportant quatre cavités et munie sur une de ses faces des motifs graphiques.

Dans l'étape suivante, on découpe la plaque ainsi obtenue pour réaliser quatre corps de carte qui sont identiques à celui qui est montré sur la figure 2c. En plus des graphismes proprement dits, l'élément suport comporte des marques de positionnement afin de permettre un découpage précis du corps de carte. Dans ce deuxième mode de réalisation, il est également possible d'assurer le maintien de l'étiquette contre la paroi principale du corps de carte en créant ou en utilisant les charges électrostatiques ainsi que celà a été décrit en détails en liaison avec le premier mode de mise en oeuvre de l'invention.

Il faut ajouter que dans certains cas seul le graphisme sur la face avant du corps de carte est complexe à réaliser. Il peut être alors intéressant d'utiliser le mode de mise en oeuvre des figures 3 avec un matériau d'injection non transparent et une étiquette portant un graphisme seulement sur sa face externe.

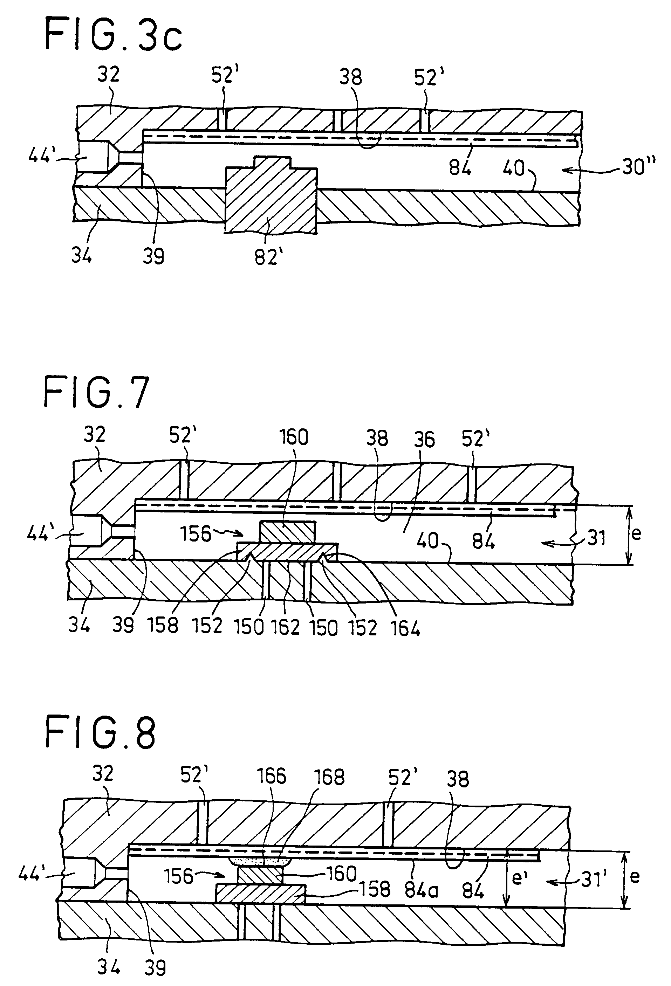

Dans la description détaillée précédente, on a considéré uniquement la réalisation du corps de carte avec ses graphismes. Or, comme cela est bien connu, une carte complète comporte non seulement un corps de carte mais également un module électronique monté dans la cavité du corps de carte. Le module électronique comprend essentiellement une pastille semiconductrice dans laquelle sont réalisés des circuits électroniques, des plages de contact électrique externes, visibles en 18 sur la figure 1, des liaisons électriques entre les plages de contact et les bornes de la pastille semi-conductrice et, le plus souvent, un matériau d'enrobage pour protéger la pastille semiconductrice et les liaisons électriques. Les modules électroniques pour cartes à mémoire peuvent présenter différentes formes et organisations. En particulier les plages externes de contact électrique ainsi que les liaisons électriques peuvent être réalisées de différentes manières. Les brevets américains 4.625.102 et 4.737.620 décrivent plusieurs modes de réalisation de ces modules. Les demandes de brevet européens publiées 254.640, 371.855 et 344.058 déposées au nom de Schlumberger Industries décrivent d'autres formes de modules électroniques. La description de ces brevets et demandes de brevet doit être considérée comme faisant partie intégrante de la présente description.
En se référant successivement aux figures 7 et 8 on va décrire deux modes de réalisation de cartes à mémoire complètes, c'est-à-dire comportant un module électronique.

Dans l'exemple illustré par la figure 7, on utilise un moule 31 qui est identique au moule 30'' de la figure 3c à la différence suivante :

Le noyau 82 est supprimé et il est remplacé par des orifices d'aspiration tels que 150.

En outre la portion de la paroi 40 de la partie 34 du moule où faisait saillie le noyau 82' est munie de petits ergots de positionnement 152.

On va maintenant décrire la réalisation d'une carte à l'aide du moule de la figure 7. Lorsque le moule 31 est ouvert, on met en place, à l'aide d'un manipulateur, une étiquette 84 contre la paroi 38 du moule. On active l'aspiration pour maintenir en place l'étiquette 84. Puis, à l'aide d'un manipulateur, on met en place un module électronique 156 contre une partie de la paroi 40 du moule. Sur la figure 7 le module électronique 156 a été représenté de façon simplifiée et sans respecter l'échelle. On y a fait figurer la partie 158 du module qui comporte les plages externes de contact et la partie 160 qui comporte la pastille semiconductrice, les liaisons électriques et l'enrobage. La face externe 162 de la partie 158 du module électronique est munie de petits orifices 164 qui peuvent coopérer avec les ergots 152 ménagés dans la paroi 40 du moule. Lors de la mise en place du module électronique 156 dans le moule, les ergots 152 pénètrent dans les orifices 164 du module. Celui-ci est donc parfaitement positionné par rapport à la paroi du moule et donc par rapport au corps de la carte qui sera réalisé. On active ensuite l'aspiration par les orifices 150 pour maintenir la face externe 162 du module plaquée contre la paroi 40 du moule. On referme le moule 31 et on injecte par la buse 44' le matériau plastique qui est transparent si l'étiquette 84 est double face. Lorsqu'on démoule la pièce ainsi réalisée, on obtient une carte complète, le module électronique étant surmoulé par le matériau formant le corps de carte, à l'exception de sa face externe 162.
La figure 8 montre un deuxième exemple de réalisation d'une carte complète. Le moule 31' utilisé est identique au moule 31 de la figure 7. Toutefois, comme le montre la figure 8, il peut ne pas comporter les ergots de positionnement 152 de la figure 7.

Selon ce deuxième mode de réalisation, on introduit dans le moule ouvert un ensemble constitué par l'étiquette 84 et par un module 156 qui est déjà fixé sur l'étiquette 84. Plus précisément la face interne 166 de la partie 160 du module électronique est fixée sur la face interne 84a de l'étiquette 84 par une couche 168 de matériau adhésif. L'épaisseur de la couche 168 de matériau adhésif est déterminée pour que l'épaisseur totale e' de l'ensemble formé par l'étiquette 84, le module 156 et la couche d'adhésif 168 soit très légèrement supérieure à l'épaisseur **e** de la cavité du moule. Du fait de sa fixation préalable sur l'étiquette 84, le module électronique 156 est parfaitement positionné par rapport à celle-ci.
Lorsque le moule est ouvert, on introduit dans le moule, à l'aide d'un manipulateur, l'ensemble constitué par l'étiquette 84 et le module 156, et on place l'étiquette 84 contre la paroi 38 du moule. On active le système d'aspiration associé aux orifices 52, et on referme le moule 31. Lors de cette fermeture la face externe 162 du module électronique 156 est plaquée contre la paroi 38 de la partie 34 du moule. La différence entre les épaisseurs e et e' est absorbée par un écrasement correspondant de la couche de matériau adhésif 168. On procède alors à l'injection du matériau plastique dans la cavité du moule par la base d'injection 44'.

Lors du démoulage on obtient une carte complète identique à celle qui est obtenue par le procédé de la figure 7. Il va de soi que le matériau adhésif 168 et le matériau plastique de moulage doivent être totalement compatibles et, si possible, tous les deux transparents ou tous les deux de la même teinte.

Bien entendu le procédé qui vient d'être décrit en liaison avec les figures 7 et 8 peut s'appliquer au cas de la fabrication simultanée de plusieurs cartes à l'aide d'un moule dont l'empreinte réalise une plaque correspondant à plusieurs corps de carte. Les modifications à apporter aux figures 5 et 6 sont celles qui ont été décrites en liaison avec les figures 3c, 7 et 8.

## Revendications

1. Procédé de réalisation d'un corps de carte présentant deux faces principales, une desdites faces au moins comportant un graphisme, ledit procédé comprenant les étapes suivantes :
a) on fournit un moule dont l'empreinte définit la forme extérieure du corps de carte, ladite empreinte étant limitée par deux parois principales définissant lesdites faces principales;
b) on dispose dans ledit moule un élément support unique ayant les dimensions de ladite face principale comportant sur chacune de ses deux faces un graphisme et on maintient ledit élément support contre une des parois principales du moule de telle manière qu'une des faces de l'élément support soit plaquée contre ladite paroi;
c) on injecte dans ledit moule un matériau thermoplastique transparent de telle manière que ledit matériau thermoplastique remplisse la totalité de l'espace limité par ladite empreinte non occupé par ledit élément support et adhère audit élément support ; et
d) on démoule la pièce, par quoi on obtient un corps de carte muni d'un graphisme visible sur chacune de ses faces.

2. Procédé de réalisation d'une pluralité de corps de carte, chaque corps de carte présentant deux faces principales séparées par une épaisseur(e), au moins une desdites faces principales comportant un graphisme, ledit procédé comprenant les étapes suivantes :
a) on fournit un moule dont l'empreinte définit la forme extérieure à donner à une plaque, ladite empreinte étant limitée par deux parois principales, chaque paroi principale contenant une des faces principales de la pluralité de corps à réaliser, lesdites parois étant séparées par une distance égale à ladite épaisseur (e);
b) on dispose dans ledit moule au moins un élément support comportant sur au moins une de ses faces les graphismes à réaliser sur la pluralité de corps de carte et on maintient ledit élément support contre une des parois principales du moule de telle manière que la face de l'élément support comportant des graphismes soit plaquée contre ladite paroi principale;
c) on injecte dans ledit moule un matériau thermoplastique de telle manière que le matériau thermoplastique remplisse la totalité de l'espace limité par ladite empreinte non occupé par ledit élément support et adhère audit élément support;
d) on démoule la plaque ainsi obtenue; et
e) on découpe ladite plaque pour séparer lesdits corps de carte.

3. Procédé selon la revendication 2, caractérisé en ce que ledit matériau thermoplastique est transparent et en ce que ledit élément support est unique et comporte un graphisme ou des graphismes sur chacune de ses deux faces.

4. Procédé selon l'une quelconque des revendications 1 et 3, caractérisé en ce que ledit matériau plastique est injecté par au moins un orifice disposé dans la paroi latérale de l'empreinte du moule.

5. Procédé selon l'une quelconque des revendications 1 et 3, caractérisé en ce que ledit matériau thermoplastique est injecté par au moins un orifice disposé dans la paroi principale de l'empreinte sur laquelle ledit élément support est plaqué, ledit élément support comportant un trou au droit dudit orifice d'injection.

6. Procédé selon l'une quelconque des revendications 1 et 3, caractérisé en ce que ledit matériau plastique est injecté par au moins un orifice disposé dans la paroi principale de l'empreinte du moule sur laquelle ledit élément support n'est pas disposé.

7. Procédé selon l'une quelconque des revendications 1, 2, 3, 5 et 6 dans lequel ledit corps de carte comporte une cavité, caractérisé en ce que l'une des parois principales de l'empreinte du moule comporte un noyau ou un nombre de noyaux égal au nombre de corps de carte à réaliser, et en ce que le ou les orifices d'injection est ou sont disposé(s) dans le ou les noyaux.

8. Corps de carte à mémoire ayant la forme d'un parallélépipède rectangle comportant deux faces principales planes, une des faces principales étant constituée par une étiquette opaque sur chaque face de laquelle est imprimé au moins un graphisme et le reste dudit corps étant formé par un matériau plastique transparent adhérant à ladite étiquette.

9. Corps de carte à mémoire selon la revendication 8, caractérisé en ce qu'il comprend une cavité qui débouche dans la face principale non formée par ladite étiquette.

10. Application du procédé selon la revendication 4 à la réalisation d'une carte à mémoire, selon laquelle, lors de l'étape b), on dispose un seul élément support contre une première paroi principale du moule et on dispose un module électronique contre la deuxième paroi principale du moule de telle manière que la face externe du module électronique soit plaqué contre ladite deuxième face principale du moule.

11. Application du procédé selon la revendication 4 à la réalisation d'une carte à mémoire, selon laquelle, lors de l'étape b), on dispose dans ledit moule un ensemble comprenant un élément support et un module électronique, ledit module électronique étant rendu solidaire dudit élément support par une couche de matériau adhésif pour relier la face interne dudit module électronique à la face dudit élément support non appliquée contre une paroi principale du moule, l'épaisseur dudit ensemble étant au moins égale à ladite distance e.

12. Application selon la revendication 11, caractérisée en ce que ladite couche de matériau adhésif peut être écrasée lors de la fermeture du moule.

## Patentansprüche

1. Verfahren zur Herstellung eines Kartenkörpers mit zwei Hauptseiten, wobei mindestens eine der genannten Seiten ein graphisches Element aufweist, wobei das genannte Verfahren die folgenden Schritte aufweist:
a) es wird eine Form verwendet, deren Nest die Außenform des Kartenkörpers bestimmt, wobei das genannte Nest von zwei Hauptwandungen begrenzt ist, die die genannten Hauptseiten bestimmen;
b) in der genannten Form wird ein einzelnes Trägerelement mit den Maßen der genannten Hauptseite angeordnet, das auf jeder seiner beiden Seiten ein graphisches Element aufweist, und das genannte Trägerelement wird an eine der Hauptwandungen der Form gehalten, so daß eine der Seiten des Trägerelements sich an der genannten Hauptwandung in Anlage befindet;
c) In die genannte Form wird ein transparentes Thermoplast eingespritzt, so daß das genannte Thermoplast den gesamten nicht von dem genannten Trägerelement eingenommenen Raum, der von dem genannten Nest begrenzt wird, ausfüllt und an dem genannten Trägerelement haftet; und
d) Das so erhaltene Stück wird aus der Form gehoben, wodurch man einen Kartenkörper erhält, der mit einem auf seinen beiden Seiten sichtbaren graphischen Element versehen ist.

2. Verfahren zur Herstellung von mehreren Kartenkörpern, wobei jeder Kartenkörper zwei Hauptseiten aufweist, die durch eine Dicke (e) voneinander getrennt sind, wobei mindestens eine der genannten Hauptseiten ein graphisches Element aufweist, wobei das genannte Verfahren aus den folgenden Schritten besteht:
a) Es wird eine Form hergestellt, deren Nest die Außenform bestimmt, die eine Platte erhalten soll, wobei das genannte Nest von zwei Hauptwandungen begrenzt ist, wobei jede Hauptwandung eine der Hauptseiten der mehreren herzustellenden Körper enthält, wobei die genannten Wandungen sich in einem Abstand voneinander befinden, der gleich der genannten Dicke (e) ist;
b) In der genannten Form wird mindestens ein Trägerelement angeordnet, das auf mindestens einer seiner Seiten die graphischen Elemente aufweist, die auf den mehreren Kartenkörpern herzustellen sind, und das genannte Trägerelement wird an eine der Hauptwandungen der Form angelegt, so daß die Seite des Trägerelements, die die graphischen Elemente aufweist, sich an der genannten Hauptwandung in Anlage befindet;
c) In die genannte Form wird ein Thermoplast eingespritzt, so daß das Thermoplast den gesamten nicht von dem genannten Trägerelement eingenommenen Raum, den das genannte Nest begrenzt, ausfüllt und an dem genannten Trägerelement haftet;
d) Die so erhaltene Platte wird aus der Form gehoben; und
e) Die genannte Platte wird zerschnitten, um die genannten Kartenkörper voneinander zu trennen.

3. Verfahren nach Anspruch 2,
dadurch gekennzeichnet, daß das genannte Thermoplast transparent ist und daß das genannte Trägerelement einzeln ist und auf jeder seiner beiden Seiten ein graphisches Element oder graphische Elemente aufweist.

4. Verfahren nach einem der Ansprüche 1 bis 3,
dadurch gekennzeichnet, daß das genannte Kunststoffmaterial durch mindestens eine Öffnung eingespritzt wird, die in der Seitenwandung des Nests der Form angeordnet ist.

5. Verfahren nach einem der Ansprüche 1 bis 3,
dadurch gekennzeichnet, daß das genannte Kunststoffmaterial durch mindestens eine Öffnung eingespritzt wird, die in der Hauptwandung des Nests angeordnet ist, an der sich das Trägerelement in Anlage befindet, wobei das genannte Trägerelement ein Loch aufweist, das sich mit der genannten Einspritzöffnung in Deckung befindet.

6. Verfahren nach einem der Ansprüche 1 bis 3,
dadurch gekennzeichnet, daß das genannte Kunststoffmaterial durch mindestens eine Öffnung eingespritzt wird, die in der Hauptwandung des Nests der Form angeordnet ist, an der sich das Trägerelement nicht in Anlage befindet.

7. Verfahren nach einem der Ansprüche 1, 2, 3, 5 und 6, wobei der genannte Kartenkörper eine Vertiefung aufweist, dadurch gekennzeichnet, daß eine der Hauptwandungen des Nests der Form einen Kern bzw. eine der Anzahl der herzustellenden Kartenkörper entsprechende Anzahl von Kernen aufweist, und daß die Einspritzöffnung bzw. -öffnungen in dem Kern bzw. den Kernen angeordnet ist bzw. sind.

8. Speicherkartenkörper mit der Form eines rechtwinkligen Parallelepipeds mit zwei flachen Hauptseiten, wobei eine der Hauptseiten von einem lichtundurchlässigen Etikett gebildet wird, auf dessen beiden Seiten mindestens ein graphisches Element aufgedruckt ist, und wobei der übrige Körper aus einem transparenten Kunststoffmaterial gebildet ist, das an dem genannten Etikett haftet.

9. Speicherkartenkörper nach Anspruch 8,
dadurch gekennzeichnet, daß er eine Vertiefung aufweist, die in die nicht von dem genannten Etikett gebildete Hauptseite mündet.

10. Anwendung des Verfahrens nach Anspruch 4 für die Herstellung einer Speicherkarte, wobei in Schritt b) ein einzelnes Trägerelement an einer ersten Hauptwandung der Form angeordnet wird und ein Elektronikmodul an der zweiten Hauptwandung der Form angeordnet wird, dergestalt daß die Außenseite des Elektronikmoduls an der genannten zweiten Hauptwandung der Form in Anlage kommt.

11. Anwendung des Verfahrens nach Anspruch 4 für die Herstellung einer Speicherkarte, wobei in Schritt b) in der genannten Form eine Anordnung angeordnet wird, die aus einem Trägerelement und einem Elektronikmodul besteht, wobei das genannte Elektronikmodul mit dem genannten Trägerelement durch eine Klebstoffschicht fest verbunden wird, um die Innenseite des genannten Elektronikmoduls mit der Seite des genannten Trägerelements zu verbinden, die nicht an einer Hauptwandung der Form in Anlage ist, wobei die Dicke der der genannten Anordnung mindestens gleich dem genannten Abstand (e) ist.

12. Anwendung nach Anspruch 11,
dadurch gekennzeichnet, daß die genannte Klebstoffschicht beim Schließen der Form zerquetscht werden kann.

## Claims

1. Process for producing a card body presenting two principal faces, at least one of said faces comprising a graphic symbol, said process comprising the following steps of:
a) furnishing a mould whose imprint defines the outer shape of the card body, said imprint being limited by two principal walls defining said principal faces;
b) disposing in said mould at least one support element comprising on at least one of its faces a graphic symbol and maintaining said support element against one of the principal walls of the mould so that the face or one of the faces of the support element comprising a graphic symbol is applied against said wall;
c) injecting a thermoplastics material into said mould so that said thermoplastics material fills all the space limited by said imprint not occupied by said support element and adheres to said support element; and
d) demoulding the piece, whereby a card body provided with a graphic symbol is obtained.

2. Process for producing a plurality of card bodies, each card body presenting two principal faces separated by a thickness e, at least one of said principal faces comprising a graphic symbol, said process comprising the following steps of:
a) furnishing a mould whose imprint defines the outer shape to be given to a sheet, said imprint being limited by two principal walls, each principal wall containing one of the principal faces of the plurality of bodies to be made, said walls being separated by a distance equal to said thickness (e);
b) disposing in said mould at least one support element comprising on at least one of its faces the graphic symbols to be made on the plurality of card bodies and maintaining said support element against one of the principal walls of the mould so that the face or one of the faces of the support element comprising graphic symbols is applied against said principal wall;
c) injecting a thermoplastics material into said mould so that the thermoplastics material fills all the space limited by said imprint not occupied by said support element and adheres to said support element;
d) demoulding the sheet thus obtained; and
e) cutting said sheet to separate said card bodies.

3. Process according to claim 2, characterized in that said thermoplastics material is transparent and said support element is single and comprises a graphic symbol or symbols on each of its two faces.

4. Process according to any one of claims 1 and 3, characterized in that said plastics material is injected through at least one orifice disposed in the lateral wall of the imprint of the mould.

5. Process according to any one of claims 1 to 3, characterized in that said thermoplastics material is injected through at least one orifice made in the principal wall of the imprint on which said support element is applied, said support element comprising a hole level with said injection orifice.

6. Process according to any one of claims 1 to 3, characterized in that said plastics material is injected through at least one orifice made in the principal wall of the imprint of the mould on which said support element is not disposed.

7. Process according to any one of claims 1, 2, 3, 5 and 6, in which said card body comprises a cavity, characterized in that one of the principal walls of the imprint of the mould comprises a core or a number of cores equal to the number of card bodies to be made, and the or each injection orifice is disposed in the core or cores.

8. Memory card body having the shape of a rectangular parallelepiped comprising two principal faces, one of the principal faces being constituted by an opaque label on each face of which is printed at least a graphic symbol, the rest of said body being formed by a transparent plastics material adhering to said label.

9. Memory card body according to claim 8, characterized in that it comprises a cavity which opens out in the principal face not formed by said label.

10. Application of the process according to claim 4 to the production of a memory card, according to which, during step b, one support element is disposed against a first principal wall of the mould and an electronic module is disposed against the second principal wall of the mould so that the outer face of the electronic module is applied against said second principal face of the mould.

11. Application of the process according to claim 4 to the production of a memory card, according to which, during step b, there is disposed in said mould an assembly comprising a support element and an electronic module, said electronic module being rendered fast with said support element by a layer of adhesive material to connect the inner face of said electronic module to that face of said support element not applied against a principal wall of the mould, the thickness of said assembly being at least equal to said distance e.

12. Application according to claim 11, characterized in that said layer of adhesive material may be crushed during closure of the mould.
